# EUROPÄISCHE PATENTSCHRIFT

(11) **EP 0 846 413 B1**
(45) Veröffentlichungstag und Bekanntmachung des Hinweises auf die Patenterteilung: **26.06.2002**
(21) Anmeldenummer: 97120057.1
(22) Anmeldetag: 16.11.1997
(51) Int. Cl.: A01G 27/04

(54) **Pflanzvorrichtung**
Plant growing device
Dispositif pour la culture de plantes

(30) Priorität: 28.11.1996 DE 29620728 U; 24.12.1996 DE 29622382 U
(43) Veröffentlichungstag der Anmeldung: 10.06.1998
(73) Patentinhaber: Müller, Siegfried, Dipl.-Ing., 31275 Lehrte (DE)
(72) Erfinder: Müller, Siegfried, Dipl.-Ing., 31275 Lehrte (DE)
(74) Vertreter: Säger, Manfred, Dipl.-Ing.

(56) Entgegenhaltungen:
- DE-A- 2 316 275
- DE-C- 697 345
- FR-A- 2 556 928
- GB-A- 2 265 292
- US-A- 5 269 095

## Beschreibung

Die vorliegende Erfindung betrifft eine Pflanzvorrichtung nach dem Oberbegriff des Anspruchs 1.

Es gibt unterschiedliche Arten von Pflanzvorrichtungen. So sind zum Beispiel Pflanzvorrichtung für Hydrokulturen bekannt. Derartige Pflanzvorrichtungen weisen einen Pflanzbehälter auf, der mit Kügelchen aus geblähtem Ton gefüllt ist. Die Pflanzen sind mit ihren Wurzeln in die Füllung von Tonkügelchen eingesetzt.

Diese Pflanzvorrichtungen für Hydrokulturen weisen als wesentlichen Vorteil gegenüber herkömmlichen Topfpflanzen sehr lange Gießintervalle von zum Beispiel vier Wochen auf, da der Bodenbereich der Pflanzenbehälter als Wasserreservoir dient, aus dem die Pflanzen mittels der Kapillarwirkung der Tonkügelchen allmählich das Wasser aufnehmen. Diese Pflanzvorrichtungen für Hydrokulturen sind in der Regel mit einem Wasserstandsanzeiger versehen, der die Menge des im Wasserreservoirs gespeicherten Wasser anzeigt.

Aus dem Prospekt "MANNA SUNSHINE" der Firma Wilhelm Haug GmbH & Co. KG, 72119 Ammerbuch, ist ein etwa quaderförmiger, nach oben offener Pflanzenkasten bekannt, der eine Bodenwandung und Seitenwandungen aufweist. An der Bodenwandung sind domartige Erhabungen ausgeformt, auf welchen ein Zwischenboden mit Abstand oberhalb der Bodenwandung lagert. Auf dem Zwischenboden kann eine Pflanzenkultur, zum Beispiel Erde mit darin eingesetzten Pflanzen, angeordnet werden.

Der Zwischenraum zwischen der Bodenwandung des Pflanzenkastens und dem Zwischenboden dient als Wasserreservoir. Ein Saugdocht ist in den Zwischenboden eingesetzt, der bis zur Bodenwandung des Pflanzenkastens herabhängt und so das im Wasserreservoir gespeicherte Wasser mittels Kapillarwirkung allmählich in die Pflanzenerde befördert. Es kann im Pflanzenkasten ein Wasserstandsanzeiger eingestellt werden, der mittels eines Schwimmers den im Wasserreservoir befindlichen Wasserstand anzeigt. Dieser Pflanzenkasten erlaubt durch die Ausbildung eines Wasserreservoirs im Bodenbereich ähnlich lange Gießintervalle wie bei Pflanzeinrichtungen für Hydrokulturen.

Pflanzenkästen, Pflanztröge oder dergleichen werden normalerweise vollständig bepflanzt. In unseren Breiten ist es jedoch erforderlich, vor Eintreten des Winters entweder die Pflanzen aus den Pflanztrögen und Pflanzenkästen herauszunehmen, oder aber die Pflanztröge insgesamt abzunehmen und in einen frostsicheren Raum zu stellen, damit die Pflanzen überwintern können.

Abgesehen davon, daß diese jährliche Arbeit beschwerlich und für ältere Menschen ohne Hilfe kaum durchführbar ist, wird bei Überwinterung im nächsten Frühjahr wieder derselbe Pflanztrog mit den gleichen Pflanzen hergenommen, was zwar billig kommt, jedoch langweilig ist.

Ferner ist ein gattungsgemäßer Pflanzvorrichtung bekannt (FR-A-2 556 928; DE 697 345 C). Diese lassen jedoch keine definierte Wassermenge zu, was insoweit von Nachteil ist, als nach Gefühl entweder zuviel Wasser eingefüllt wird, was die Gefahr des Verfaulens der Pflanze oder der Wurzeln in sich birgt, oder aber zu wenig, was entweder zu zu kurzen Gießintervallen führt oder das Verdorren der Pflanze zur Folge haben kann.

Der Erfindung liegt die Aufgabe zugrunde, eine Pflanzvorrichtung zu schaffen, die weder langweilig, noch beschwerlich und zudem einfach zu warten ist.

Diese Aufgabe wird durch eine Pflanzvorrichtung mit den Merkmalen des Hauptanspruchs gelöst.

Da bei der erfindungsgemäßen Pflanzvorrichtung das Wasserreservoir getrennt von der im Korb befindlichen Pflanzenkultur angeordnet ist, kann die Pflanzenkultur nur die notwendige Wassermenge aufnehmen und ist nicht auf subjektive Ansichten beim Gießen beschränkt.

Zweckmäßige Ausgestaltungen und Weiterbildungen der Erfindung sind in den Unteransprüchen gekennzeichnet.

Die Erfindung wird nachfolgend näher anhand der Zeichnungen beispielhaft erläutert. Es zeigt:
- Figur 1: eine erfindungsgemäße Pflanzvorrichtung in perspektivischer Ansicht mit Blickrichtung von schräg oben auf eine Stirnseite und im Teilschnitt;
- Figur 2: die in Figur 1 gezeigte Pflanzvorrichtung in der Draufsicht;
- Figur 3: eine weitere Ausführungsform einer erfindungsgemäßen Pflanzvorrichtung im Querschnitt mit zusätzlichen Elementen, die in der Art einer Explosionsdarstellung gezeigt sind;
- Figur 4: einen erfindungsgemäßen Pflanzbehälter in perspektivischer Ansicht mit Blick schräg auf eine Stirnseite und im Teilschnitt.

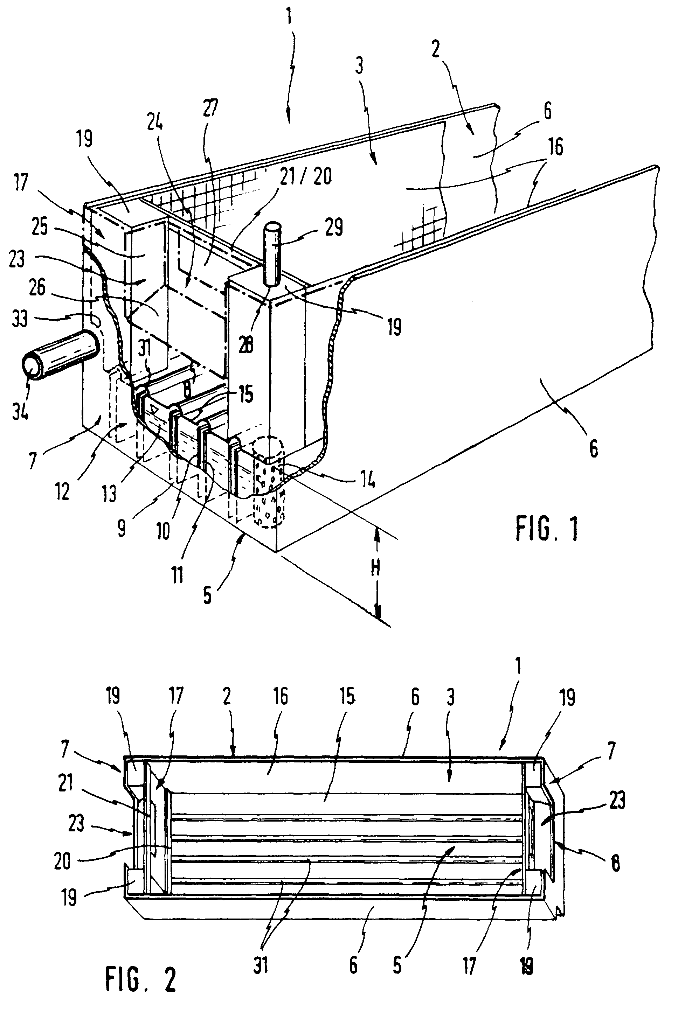

Die erfindungsgemäße Pflanzvorrichtung 1 weist einen nach oben offenen Pflanzbehälter 2 und einen Einsatz zum Einsetzen in den Pflanzbehälter 2 auf, der aus einem nach oben offenen Korb 3 besteht. Der in den Zeichnungen dargestellte Pflanzbehälter 2 ist jeweils ein in an sich bekannter Weise quaderförmig ausgebildeter Pflanzenkasten mit einer Bodenwandung 5, und umlaufend an der Bodenwandung angeordneten Seitenwandungen, nämlich zwei Längsseitenwandungen 6 und zwei Stirnseitenwandungen 7. Die Stirnseitenwandungen 7 weisen in der Stirnansicht eine nach oben offene U-Form auf, die eine Ausnehmung 8 begrenzt, deren Funktion weiter unten erläutert wird. (Figur 2).

An der Bodenwandung 5 sind schlitzförmige Öffnungen 9 angebracht, die parallel zu den Seitenwandungen 6 angeordnet sind. Auf der Bodenwandung 5 befinden sich beidseitig angrenzend an den schlitzförmigen Öffnungen vertikal stehende Stegleisten 10, die sich über die gesamte Länge der Bodenwandung 5 erstrecken. Die Stegleisten 10 erstrecken sich nach oben bis zu einer maximalen Füllhöhe H, bis zu welcher Wasser in den Pflanzbehälter 2 gefüllt werden kann. Zwischen den Stegleisten 10 ist somit ein nach oben und unten offener Hohlraum 11 ausgebildet, durch welchen überschüssiges Wassser abgeleitet wird. Die Öffnungen 9 und die Stegleisten 10 dienen somit als Überlaufelemente 12 eines Wasserspeichers 13, der das durch die Bodenwandung 5 und die Seitenwandungen 6, 7 bis zur maximalen Füllhöhe H begrenzte Volumen umfaßt. Die Öffnungen 9 können zudem zur Aufnahme eines Aufhängehakens dienen, wie es weiter unten erläutert wird.

Auf der Bodenwandung 5 stehen senkrecht Stützpfosten 14 von vorbestimmter Länge, die etwa der maximalen Füllhöhe H entspricht. Diese Stützpfosten 14 sind vorzugsweise als hohe Stützrohre ausgebildet.

Der Korb 3 weist eine an den Pflanzbehälter 2 angepaßte, quaderförmige Raumform mit einer Bodenwandung 15, vier Seitenwandungen, nämlich zwei Längsseitenwandungen 16 und zwei Stirnseitenwandungen 17, auf. Die Seitenwandungen 16, 17 sind etwa formschlüssig an die Seitenwandungen 6, 7 des Pflanzbehälters 2 angepaßt. Die Wandungen 15 bis 17 bestehen vorzugsweise aus einem grobmaschigen Kunststoffgitter. In den Eckbereichen des Korbes 3 sind vertikale Verstärkungssäulen 19 eingesetzt, wobei jeweils zwei an einer Stirnseitenwandung 17 angeordnete Verstärkungssäulen 19 mittels einem oberen und einem unteren Verbindngssteg 20, 21 miteinander verbunden sind. Die Verbindungsstege 20, 21 verlaufen parallel zu den Stirnseitenwandungen 17 und sind gegenüber den Stirnseitenwandungen 17 etwa um die Dicke der Verstärkungssäulen 19 nach innen versetzt angeordnet. Die als Kunststoffgitter ausgebildeten Stirnseitenwandungen 17 sind im Bereich zwischen den beiden angrenzenden Verstärkungssäulen 19 und von ihren Oberkanten bis etwa auf ihre halbe Höhe zu einer nach innen weisenden Mulde 23 ausgeformt. Die Mulden 23 weisen jeweils einen Muldenboden 24, zwei seitliche Muldenwandungen 25 und eine untere Muldenwandung 26 auf. Die untere Muldenwandung 26 ist in Richtung zum Muldenboden 24 schräg ansteigend angeordnet. In den Muldenboden 24 ist an seinem oberen Randbereich eine Öffnung 27 eingebracht, die sowohl als Einfüllschacht dient, als auch durchgriffen werden kann, so daß der Korb 3 an den beiden oberen Verbindungsstegen 21 gehaltert werden kann. Die Mulden 23 sind im Bereich den Ausnehmungen 8 der Stirnseitenwanderungen 7 des Pflanzbehälters 2 von außen frei zugänglich angeordnet und haben somit in Verbindung mit den oberen Verbindungsstegen 21 die Funktion einer Griffmulde.

Den Muldenboden 24 und die untere Muldenwandung 26 weisen eine geschlossene, glatte Oberfläche auf, an welche Aufkleber aufgebracht werden können, die eine Kundenadresse, Werbung oder dergleichen wiedergeben.

Der Korb 3 ist im Pflanzbehälter 2 mit seiner Bodenwandung 15 auf die Stützpfosten 14 aufgesetzt, wobei die Stützpfosten 14 als Abstandshalteeinrichtung fungieren, um die Bodenwandung 15 des Korbes 3 mit vorbestimmtem Abstand oberhalb der Bodenwandung 5 des Pflanzenbehälters 2 anzuordnen. In dem Bereich zwischen den beiden Bodenwandungen 5, 15 ist der Wasserspeicher 13 ausgebildet.

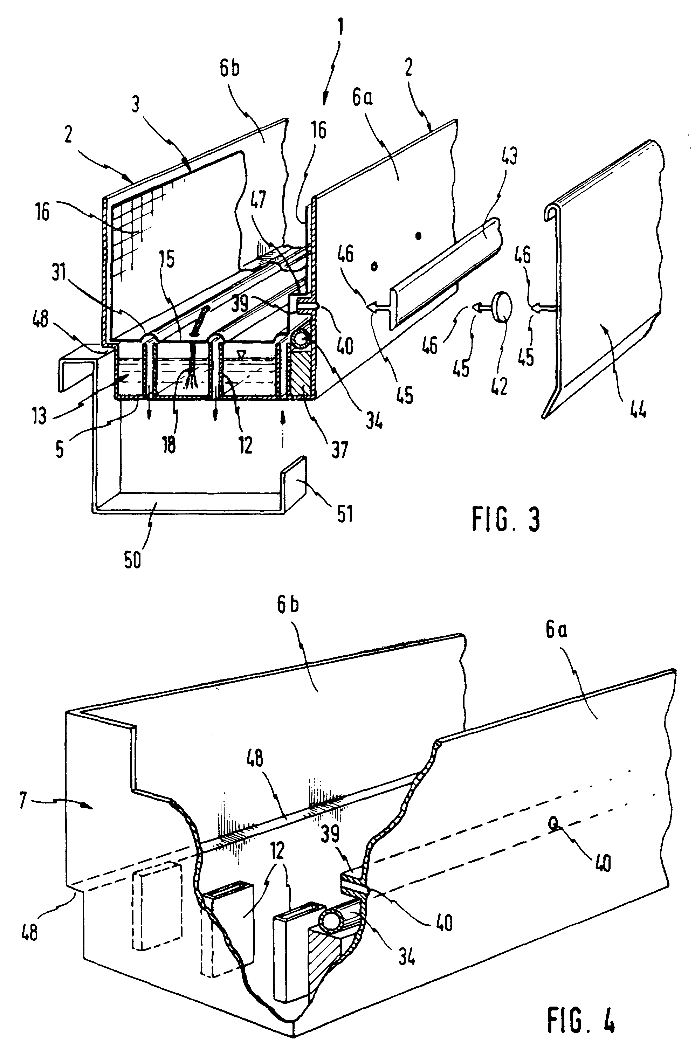

In der Bodenwandung 15 des Kopfes 3 ist ein Saugdocht 18 oder ein anderes Kapillarwirkung besitzendes Elmeent eingesetzt. Der Saugdocht 18 reicht mit seinem unteren Ende bis zur Bodenwandung 5 des Pflanzbehälters 2 (Fig. 3).

Zumindest eine der Verstärkungssäulen 19 weist eine vertikale Bohrung 28 zur Aufnahme eines Wasserstandsanzeigers 29 auf. Diese Bohrung 28 fluchtet vorzugsweise mit einem rohrförmigen, perforierten Stützpfosten 14 so daß der an seinem unteren Ende einen Schwimmer aufweisende Wasserstandsanzeiger 29 mit seinem Schwimmer in dem Stützpfosten 14 vertikal verschiebbar gelagert ist.

In der Bodenwandung 15 des Korbes 3 sind in Längsrichtung verlaufende, im Querschnitt U-förmige nach unten offene Ausformungen 31 eingebracht. Die Ausformungen 31 befinden sich jeweils über den Überlaufelementen 12, so daß sichergestellt ist, daß die nach oben offenen Überlaufelemente 12 nicht durch die Bodenwandung 15 des Korbes 3 versperrt werden. Zudem bilden die Ausformungen 31 eine Drainage bei der Anzucht der im Korb 3 befindlichen Pflanzen, bei welcher der Korb 3 in der Regel unmittelbar auf eine Bodenfläche aufgestellt wird.

An einem unteren Eckbereich des Korbes 3, an dem die Bodenwandung 15, eine Längsseitenwandung 16 und eine Stirnseitenwandung 17 aneinanderstoßen, ist eine Aussparung 33 zur Aufnahme eines Wasserschlauches 34 angeordnet, der den Pflanzbehälter 2 in einer zur Aussparung 33 angrenzend angeordneten Öffnung durchsetzt. Der Wasserschlauch 34 dient zum Anschluß eines Bewässerungssystems.

Ein weiteres Ausführungsbeispiel der erfindungsgemäßen Pflanzvorrichtung ist in Figur 3 dargestellt. Diese Pflanzvorrichtung ist ähnlich zu der oben beschriebenen Pflanzvorrichtung ausgebildet; demgemäß sind gleiche Teile mit gleichen Bezugszeichen versehen.

Bei dieser Pflanzvorrichtung 1 weist der Pflanzbehälter 2 eine vordere Längsseitenwandung 6a und eine rückseitige Längsseitenwandung 6b auf. An der vorderen Längsseitenwandung 6a ist an dem an der Bodenwandung 5 angrenzenden Bereich eine hochkant angeordnete Sockelleiste 37 angeformt. Die Sockelleiste 37 verstärkt den aus einem dünnwandigen Kunststoffmaterial ausgebildeten Pflanzbehälter 2, so daß ein Durchbiegen selbst bei vollem Pflanzenbesatz und maximalem Wasserstand verhindert wird. Auf der oberen Stirnfläche der Sockelleiste 37 liegt der Wasserschlauch 34 auf, der sich in Längsrichtung durch die gesamte Pflanzvorrichtung 1 erstreckt. Oberhalb des Wasserschlauches 34 ist an der Innenseite der vorderen Längsseitenwandung 6a eine Steckleiste 39 angeordnet, wobei an der vorderen Längsseitenwandung 6a in die Steckleiste 39 mündende punkt- oder schlitzförmige Stecköffnungen 40 eingebracht sind. An der Steckleiste 39 können Zierelemente, wie zum Beispiel Zierknöpfe 42, Zierleisten 43 oder die vordere Seitenwandung 6a vollständig verkleidende Blendenelemente 44, mittels an den Zierelementen angeordneten Steckstiften 45 lösbar eingesteckt werden, wobei die Steckstifte 45 durch die Stecköffnungen 40 in die Steckleiste 39 eingefügt werden und mit einer pfeilförmigen, widerhakenartig ausgebildeten Spitze 46 in der Steckleiste 39 lösbar verankert sind. Eine solche Steckleiste 39 am Pflanzbehälter 2 erlaubt eine einfache und schnelle Anpassung der Optik an die in die Pflanzvorrichtung 1 eingesetzten Pflanzen, ohne daß hierbei der ortsfest installierte Pflanzbehälter 2 ausgetauscht werden muß.

Die Steckleiste 39 ist vorzugsweise einteilig und/oder einstückig an der vorderen Längsseitenwandung 6a angeformt und bildet zugleich eine horizontale, in den Innenraum des Pflanzbehälters 2 vorstehende Halteleiste, auf welche der Korb 3 mit einer an seiner Längsseitenwandung 16 korrespondierend nach innen abgesetzten Stufe 47 lagert.

An der rückseitigen Längsseitenwand 6b des Pflanzbehälters 2 ist etwa im Bereich der maximalen Füllhöhe eine in dem Innenraum des Pflanzbehälters 2 vorstehende Stufe 48 ausgebildet, auf welcher der Korb 3 mit einer Bodenwandung 15 aufliegt.

Die an der rückseitigen Längsseitenwandung ausgebildete Stufe 48 und an der vorderen Längsseitenwandung 6a des Pflanzbehälters 2a angeformte Sockel- bzw. Halteleiste 37 fungieren als Abstandshalteeinrichtungen, um den Korb 3 mit seiner Bodenwandung 15 auf einem vorbestimmten Abstand zur Bodenwandung 5 des Pflanzbehälters 2 zu halten.

Die erfindungsgemäße Pflanzvorrichtung kann mittels eines Aufhängehakens 50 an einem Balkon od. dgl. eingehängt werden. Der Aufhängehaken 50 weist ein rechtwinklig nach oben gebogenes Ende 51 auf, das in eine der Öffnungen 9 der Bodenwandung 5 des Pflanzbehälters 2 eingreift. Die Öffnung 9 zur Aufnahme des nach oben gebogenen Endes des Aufhänghakens ist vorzugsweise im Bereich der vorderen Längsseitenwandung 6a des Pflanzbehälters 2 angeordnet.

Ein weiteres Ausführungsbeispiel eines erfindungsgemäßen Pflanzbehälters 2 ist in Figur 4 gezeigt. Dieser Pflanzbehälter 2 entspricht im wesentlichen dem Pflanzbehälter aus Figur 3; demgemäß sind gleiche Teile mit gleichen Bezugszeichen versehen.

Die Überlaufelemente 12 sind als kurze, vertikal auf der Bodenwandung 5 des Pflanzbehälters 2 stehende Flachrohre ausgebildet, die im Querschnitt rechteckig geformt sind.

Die Überlaufelemente 12 können auch eine andere Raumform aufweisen; wesentlich ist, daß sie einen nach oben und unten offenen Hohlraum begrenzen und im Bereich der maximalen Füllhöhe H eine Öffnung aufweisen, durch welche überschüssiges Wasser abfließen kann.

Die Erfindung ist nicht auf die oben beschriebenen Ausführungsbeispiele beschränkt. Im Rahmen der Erfindung können die Abstandshalteeinrichtungen auch am Korb 3, z.B. in Form von nach unten zeigenden Stützpfosten, ausgebildet sein.

## Patentansprüche

1. Pflanzvorrichtung mit einem nach oben offenen Pflanzbehälter (2), wie z.B. einem Pflanztrog, Pflanzenkasten oder dergleichen, mit einer Bodenwandung (5) und Seitenwandungen (6, 7), mit einem Einsatz zum Einsetzen in den Pflanzbehälter (2), wobei der Einsatz aus einem nach oben offenen Korb (3) zur Aufnahme einer Pflanzkultur besteht und der Korb (3) eine Bodenwandung (15) und Seitenwandungen (16, 17) aufweist, und wobei der Pflanzbehälter (2) oder der Korb (3) mit einer Abstandshalteeinrichtung (14; 39, 48) derart versehen ist, so daß die Bodenwandung (15) des Korbes (3) mit Abstand oberhalb der Bodenwandung (5) des Pflanzbehälters (2) angeordnet ist und der Zwischenraum zwischen beiden Bodenwandungen (5, 15) einen Wasserspeicher (13) bildet, **dadurch gekennzeichnet, daß** an der Bodenwandung (5) des Pflanzbehälters (2) Überlaufelemente (12) ausgebildet sind, die sich von der Bodenwandung (5) nach oben bis zu einer maximalen Füllhöhe H erstrecken, wobei die Überlaufelemente (12) einen nach unten offenen Hohlraum begrenzen und zumindest im Bereich der maximalen Füllhöhe H eine Öffnung aufweisen.

2. Pflanzvorrichtung nach Anspruch 1, **dadurch gekennzeichnet, daß** die Überlaufelemente (12) vertikal auf der Bodenwandung (5) des Pflanzbehälters (2) angeordnete Flachrohre sind, die beispielsweise einen rechteckigen Querschnitt aufweisen.

3. Pflanzvorrichtung nach Anspruch 2, **dadurch gekennzeichnet, daß** die Überlaufelemente (12) jeweils aus zwei mit geringem Abstand parallel verlaufende, sich im wesentlichen über die gesamte Länge der Bodenwandung (5) erstreckende, Stegleisten (10) ausgebildet sind, die zwischen sich eine nach unten und oben offenen Hohlraum begrenzen.

4. Pflanzvorrichtung nach einem der Ansprüche 1 bis 3, **dadurch gekennzeichnet, daß** die Wandungen (15 bis 17) des Korbes (3) zumindest bereichsweise gitterförmig ausgebildet sind.

5. Pflanzvorrichtung nach Anspruch 1 bis 4, **dadurch gekennzeichnet, daß** der Pflanzbehälter (2) und der Korb (3) etwa langgestreckt quaderförmig mit jeweils zwei Längsseitenwandungen (6, 16) und zwei Stirnwandungen (7, 17) ausgebildet sind.

6. Pflanzvorrichtung nach einem der Ansprüche 1 bis 5, **dadurch gekennzeichnet, daß** die Abstandshalteeinrichtung durch einen oder mehrere an der Bodenwandung (5) des Pflanzbehälters (2) angeordnete Stützpfosten (14) ausgebildet ist.

7. Pflanzvorrichtung nach einem der Ansprüche 1 bis 6, **dadurch gekennzeichnet, daß** die Abstandshalteeinrichtung durch einen oder mehrere an der Bodenwandung (15) des Korbes (3) angeordnete und sich von der Bodenwandung (15) nach unten erstreckende Stützpfosten (14) ausgebildet ist.

8. Pflanzvorrichtung nach einem der Ansprüche 1 bis 6, **dadurch gekennzeichnet, daß** die Abstandshalteeinrichtung eine oder mehrere in den Innenraum des Pflanzbehälters (2) vorstehende Stufe (48) bzw. Leiste (39) aufweist, auf welche der Korb (3) aufliegt.

9. Pflanzvorrichtung nach einem der Ansprüche 1 bis 8, **dadurch gekennzeichnet, daß** in der Bodenwandung (5) des Pflanzbehälters (2) eine oder mehrere Öffnungen (9) zur Aufnahme eines nach oben abgebogenen Endes (51) eines Aufhängehakens (50) vorgesehen sind.

10. Pflanzvorrichtung nach Anspruch 9, **dadurch gekennzeichnet, daß** die Öffnung(en) benachbart zu einer vorderen Seitenwandung (6a) des Pflanzbehälters (2) angeordnet ist/sind.

11. Pflanzvorrichtung nach einem der Ansprüche 1 bis 10, **dadurch gekennzeichnet, daß** in der Bodenwandung (15) des Korbes (3) ein Kapillarwirkung besitzendes Element eingesetzt ist, das sich nach unten in den Wasserspeicher (13) erstreckt.

12. Pflanzvorrichtung nach Anspruch 11, **dadurch gekennzeichnet, daß** das Kapillarwirkung aufweisende Element ein Saugdocht (18) ist.

13. Pflanzvorrichtung nach einem oder mehreren der Ansprüche 1 bis 12, **dadurch gekennzeichnet, daß** in den Eckbereichen des Korbes (3) vertikale Verstärkungssäulen (19) eingesetzt sind, wobei jeweils zwei an einer Stirnseitenwandung (17) angeordnete Verstärkungssäulen (19) mittels einem oberen und einem unteren Verbindungssteg (20, 21) miteinander verbunden sind, wobei die Verbindungsstege (20, 21) parallel zu den Stirnseitenwandungen (17) verlaufen und gegenüber den Stirnseitenwandungen (17) etwa um die Dicke der Verstärkungssäule (19) nach innen versetzt angeordnet sind.

14. Pflanzvorrichtung nach Anspruch 13, **dadurch gekennzeichnet, daß** die Stirnseitenwandungen (17) im Bereich zwischen den beiden angrenzenden Verstärkungssäulen (19) und von ihren Oberkanten bis etwa auf ihre halbe Höhe zu einer nach innen weisenden Mulde (23) ausgeformt sind, wobei die Mulden (23) jeweils einen Muldenboden (24), zwei seitliche Muldenwandungen (25) und eine untere Muldenwandung (26) aufweisen.

15. Pflanzvorrichtung nach Anspruch 14, **dadurch gekennzeichnet, daß** die untere Muldenwandung (26) in Richtung zum Muldenboden (24) schräg ansteigend angeordnet ist und vorzugsweise der Muldenboden (24) und die untere Muldenwandung (26) geschlossene, glatte Oberflächen zur Anbringung von Aufklebern oder dergleichen aufweisen.

16. Pflanzvorrichtung nach Anspruch 14 oder 15, **dadurch gekennzeichnet, daß** in dem Muldenboden (24) an dem oberen Randbereich eine Eingriffsöffnung (27) eingebracht ist.

17. Pflanzvorrichtung nach einem der Ansprüche 1 bis 16, **dadurch gekennzeichnet, daß** sie einen Wasserstandsanzeiger (29) aufweist, der an seinem unteren Ende mit einem Schwimmer versehen ist, der im Wasserspeicher (13) angeordnet ist.

18. Pflanzvorrichtung nach Anspruch 17, **dadurch gekennzeichnet, daß** der Wasserstandsanzeiger (29) in einer Bohrung (28) in einer der Verstärkungssäulen (19) vertikal verschiebbar gelagert ist.

19. Pflanzvorrichtung nach einem der Ansprüche 1 bis 18, **dadurch gekennzeichnet, daß** an einer vorderen Längsseitenwandung (6a) des Pflanzbehälters (2) eine Steckleiste (39) angeordnet ist, in welche Zierelemente, wie z.B. Zierknöpfe (42), Zierleisten (43) oder die vordere Seitenwandung (6a) vollständig verkleidende Blendenelemente (44) mittels an den Zierelementen angeordneten Steckstiften (45) lösbar einsteckbar sind.

20. Pflanzvorrichtung nach Anspruch 19, **dadurch gekennzeichnet, daß** die Steckstifte (45) pfeilförmige, widerhakenartig ausgebildete Spitzen aufweisen.

21. Pflanzvorrichtung nach einem der Ansprüche 1 bis 20, **dadurch gekennzeichnet, daß** mehrere Körbe (3) in einen einzigen Pflanzbehälter (2) einsetzbar sind.

## Claims

1. A planting device having an upwardly open planting container (2) such as for example a planting trough, planting box or the like, having a bottom wall (5) and side walls (6, 7), and an insert for insertion into the planting container (2), wherein the insert comprises an upwardly open basket (3) for receiving plant cultivation and the basket (3) has a bottom wall (15) and side walls (16, 17), and wherein the planting container (2) or the basket (3) is provided with a spacing device (14; 39, 48) in such a way that the bottom wall (15) of the basket (3) is arranged at a spacing above the bottom wall (5) of the planting container (2) and the intermediate space between the two bottom walls (5, 15) forms a water store (13), **characterised in that** provided at the bottom wall (5) of the planting container (2) are overflow elements (5) which extend from the bottom wall (5) upwardly to a maximum filling height H, wherein the overflow elements (12) delimit a downwardly open hollow space and have an opening at least in the region of the maximum filling height H.

2. A planting device according to claim 1 **characterised in that** the overflow elements (12) are flat tubes which are arranged vertically on the bottom wall (5) of the planting container (2) and which are for example of a rectangular cross-section.

3. A planting device according to claim 2 **characterised in that** the overflow elements (12) are respectively formed from two flange bars (10) which extend parallel at a small spacing and which extend substantially over the entire length of the bottom wall (5) and which delimit between them a downwardly and upwardly open hollow space.

4. A planting device according to one of claims 1 to 3 **characterised in that** the walls (15 to 17) of the basket (3) are of a lattice-like configuration at least in a region-wise manner.

5. A planting device according to claims 1 to 4 **characterised in that** the planting container (2) and the basket (3) are of a substantially elongated parallelepipedic configuration each with two longitudinal side walls (6, 16) and two end walls (7, 17).

6. A planting device according to one of claims 1 to 5 **characterised in that** the spacer device is formed by one or more support posts (14) on the bottom wall (5) of the plant container (2).

7. A planting device according to one of claims 1 to 6 **characterised in that** the spacer device is formed by one or more support posts (14) arranged on the bottom wall (15) of the basket (3) and extending downwardly from the bottom wall (15).

8. A planting device according to one of claims 1 to 6 **characterised in that** the spacer device has one or more bars (39) or steps (48) projecting into the interior of the planting container (2), and on which the basket (3) rests.

9. A planting device according to one of claims 1 to 8 **characterised in that** provided in the bottom wall (5) of the planting container (2) are one or more openings (9) for receiving an upwardly bent end (51) of a suspension hook (50).

10. A planting device according to claim 9 **characterised in that** the opening or openings is/are arranged adjacent to a front side wall (6a) of the planting container (2).

11. A planting device according to one of claims 1 to 10 **characterised in that** fitted in the bottom wall (15) of the basket (3) is an element which has a capillary action and which extends downwardly into the water store (13).

12. A planting device according to claim 11 **characterised in that** the element having a capillary action is an absorbent wick (18).

13. A planting device according to one or more of claims 1 to 12 **characterised in that** fitted in the corner regions of the basket (3) are vertical reinforcing pillars (19), wherein each two reinforcing pillars (19) which are arranged at an end wall (17) are connected together by means of an upper and a lower connecting arm (20, 21), wherein the connecting arms (20, 21) extend parallel to the end walls (16) and are arranged displaced inwardly with respect to the end walls (17) approximately by the thickness of the reinforcing pillar (19).

14. A planting device according to claim 13 **characterised in that** the end walls (17) are shaped in the region between the two adjoining reinforcing pillars (19) and from the upper edges thereof to approximately half their height to form an inwardly extending recess (23), wherein the recesses (23) each have a recess bottom (24), two lateral recess walls (25) and a lower recess wall (26).

15. A planting device according to claim 14 **characterised in that** the lower recess wall (26) is arranged to rise inclinedly in a direction towards the recess bottom (24) and preferably the recess bottom (24) and the lower recess wall (26) have solid smooth surfaces for mounting stickers or the like.

16. A planting device according to claim 14 or claim 15 **characterised in that** a handle opening (27) is provided in the recess bottom (24) at the upper edge region.

17. A planting device according to one of claims 1 to 16 **characterised in that** it has a water level indicator (29) provided at its lower end with a float arranged in the water store (13).

18. A planting device according to claim 17 **characterised in that** the water level indicator (29) is vertically displaceably supported in a bore (28) in one of the reinforcing pillars (19).

19. A planting device according to one of claims 1 to 18 **characterised in that** arranged on a front longitudinal side wall (6a) of the planting container (2) is a push-in connection bar (39) into which ornamental elements such as for example ornamental knobs (42), ornamental bars (43) or cover elements (44) which completely clad the front side wall (6a) can be releasably inserted by means of plug-in pins (45) arranged on the ornamental elements.

20. A planting device according to claim 19 **characterised in that** the plug-in pins (45) have arrow-shaped tips of barb-like configuration.

21. A planting device according to one of claims 1 to 20 **characterised in that** a plurality of baskets (3) can be inserted into a single planting container (2).

## Revendications

1. Dispositif à plants comprenant un récipient à plants (2) ouvert vers le haut, par exemple, un bac à plants, une caissette à plants ou équivalent, qui comprend une paroi de fond (5) et des parois latérales (6, 7), un élément rapporté destiné à être placé dans le récipient à plants (2), l'élément rapporté étant composé d'un panier (3) ouvert vers le haut, destiné à recevoir une culture de plantes, et le panier (3) présentant une paroi de fond (15) et des parois latérales (16, 17), et le récipient à plants (2) ou le panier (3) étant muni d'un dispositif de maintien à distance (14 ; 39, 48) de telle manière que la paroi de fond (15) du panier (3) soit disposée à distance au-dessus de la paroi de fond (5) du récipient à plants (2), et que l'espace intermédiaire entre les deux parois de fond (5, 15) forme un réservoir d'eau (13), **caractérisé en ce qu'**au droit de la paroi de fond (5) du récipient à plants (2) sont formés des éléments de trop-plein (12) qui s'étendent vers le haut à partir de la paroi de fond (5) jusqu'à une hauteur de remplissage maximale H, les éléments de trop-plein (12) délimitant une cavité ouverte vers le bas et présentant une ouverture au moins dans la région de la hauteur de remplissage maximale H.

2. Dispositif à plants selon la revendication 1, **caractérisé en ce que** les éléments de trop-plein (12) sont des tubes plats disposés verticalement sur la paroi de fond (5) du récipient à plants (2) et qui présentent, par exemple, une section rectangulaire.

3. Dispositif à plants selon la revendication 2, **caractérisé en ce que** les éléments de trop-plein (12) sont composés chacun de deux réglettes (10) disposées parallèlement à petite distance, qui s'étendent sensiblement sur toute la longueur de la paroi de fond (5), et qui délimitent entre elles une cavité ouverte vers le haut et vers le bas.

4. Dispositif à plants selon une des revendications 1 à 3, **caractérisé en ce que** les parois (15 à 17) du panier (3) sont réalisées, au moins par zones, en forme de grille.

5. Dispositif à plants selon la revendication 1 à 4, **caractérisé en ce que** le récipient à plants (2) et le panier (3) sont de forme à peu près parallélépipédique allongée, comprenant deux parois latérales longitudinales (6, 16) et deux parois frontales (7, 17).

6. Dispositif à plants selon une des revendications 1 à 5, **caractérisé en ce que** le dispositif de maintien à distance est constitué par un ou plusieurs pieds de soutien (14) disposés au niveau de la paroi de fond (5) du récipient à plants (2).

7. Dispositif à plants selon une des revendications 1 à 6, **caractérisé en ce que** le dispositif de maintien à distance est constitué par un ou plusieurs pieds de soutien (14) disposés au niveau de la paroi de fond (15) du panier (3) qui s'étendent vers le bas à partir de la paroi de fond (15).

8. Dispositif à plants selon une des revendications 1 à 6, **caractérisé en ce que** le dispositif de maintien à distance présente un ou plusieurs épaulements (48) ou nervures (39) qui font saillie dans le volume intérieur du récipient à plants (2) et sur lesquels le panier (3) prend appui.

9. Dispositif à plants selon une des revendications 1 à 8, **caractérisé en ce qu'**une ou plusieurs ouvertures (9)sont prévues dans la paroi de fond (5) du récipient à plants (2) pour recevoir une extrémité (51) repliée vers le haut d'un crochet de suspension (50).

10. Dispositif à plants selon la revendication 9, **caractérisé en ce que** l'ouverture ou les ouvertures et/sont disposée(s) à proximité d'une paroi latérale avant (6a) du récipient à plants (2).

11. Dispositif à plants selon une des revendications 1 à 10, **caractérisé en ce que**, dans la paroi de fond (15) du panier (3) est encastré un élément présentant une propriété de capillarité qui s'étend vers le bas jusque dans le réservoir d'eau (13).

12. Dispositif à plants selon la revendication 11, **caractérisé en ce que** l'élément présentant une propriété de capillarité est une mèche aspirante (18).

13. Dispositif à plants selon une ou plusieurs des revendications 1 à 12, **caractérisé en ce que** des colonnettes de renforcement verticales (19) sont emboîtées dans les régions d'angle du panier (3), les deux colonnettes de renforcement (19) disposées au droit d'une paroi latérale frontale (17) étant reliées entre elles au moyen d'une barrette de liaison supérieure et d'une barrette de liaison inférieure (20, 21), les barrettes de liaison (20, 21) s'étendant parallèlement aux parois latérales frontales (17) et étant disposées déportées vers l'intérieur par rapport aux parois latérales frontales (17) d'une distance à peu près égale à l'épaisseur de la colonnette de renforcement (19).

14. Dispositif à plants selon la revendication 13, **caractérisé en ce que** les parois latérales frontales (17) sont conformées, dans la région entre les deux colonnettes de renforcement (19) qui y sont adjacentes, et depuis leurs bords supérieurs à peu près jusqu'à la moitié de leur hauteur pour former un renfoncement (23) dirigé vers l'intérieur, les renfoncements (23) présentant chacun un fond de renfoncement (24), deux parois latérales de renfoncement (25) et une paroi inférieure de renfoncement (26).

15. Dispositif à plants selon la revendication 14, **caractérisé en ce que** la paroi inférieure de renfoncement (26) est disposée en pente montante obliquement en direction du fond de renfoncement (24) et le fond de renfoncement (24) et la paroi inférieure de renfoncement (26) présentant de préférence une surface pleine lisse pour recevoir des étiquettes adhésives ou analogues.

16. Dispositif à plants selon la revendication 14 ou 15, **caractérisé en ce qu'**une ouverture de préhension (27) est ménagée dans le fond de renfoncement (24) le long de la région de bord supérieure.

17. Dispositif à plants selon une des revendications 1 à 16, **caractérisé en ce qu'**il présente un indicateur de niveau d'eau (29) qui est, muni à son extrémité inférieure d'un flotteur qui est disposé dans le réservoir d'eau (13).

18. Dispositif à plants selon la revendication 17, **caractérisé en ce que** l'indicateur de niveau d'eau (29) est monté mobile en translation verticale dans un perçage (28) ménagé dans une des colonnettes de renforcement (19).

19. Dispositif à plants selon une des revendications 1 à 18, **caractérisé en ce qu'**au droit d'une paroi longitudinale avant (6a) du récipient à plants (2), est disposée une réglette d'emmanchement (39) dans laquelle des éléments décoratifs comme, par exemple, des boutons décoratifs (42) des baguettes décoratives (43), ou des éléments de masquage (44) qui revêtent entièrement la paroi latérale avant (6a) peuvent être insérés de façon démontable au moyen de chevilles (45) prévues sur les éléments décoratifs.

20. Dispositif à plants selon la revendication 19, **caractérisé en ce que** les chevilles (45) présentent des pointes en forme de flèche, réalisées à la façon d'éléments de retenue.

21. Dispositif à plants selon une des revendications 1 à 20, **caractérisé en ce que** plusieurs paniers (3) peuvent être mis en place dans un seul et même récipient à plants (2).
